# EUROPÄISCHE PATENTSCHRIFT

(11) **EP 1 715 368 B1**
(45) Veröffentlichungstag und Bekanntmachung des Hinweises auf die Patenterteilung: **09.04.2008**
(21) Anmeldenummer: 06405124.6
(22) Anmeldetag: 23.03.2006
(51) Int. Cl.: G02B 6/42, G02B 6/13

(54) **Verfahren zur Herstellung eines Bauteils zur optischen Kopplung**
Method of manufacturing a component for optical coupling
Procédé de fabrication d'un dispositif de couplage optique

(30) Priorität: 18.04.2005 CH 6902005
(43) Veröffentlichungstag der Anmeldung: 25.10.2006
(73) Patentinhaber: Varioprint AG, CH-9410 Heiden (CH)
(72) Erfinder: Dietrich, Klaus, 6830 Rankweil (AU); Halter, Markus, 9443 Widnau (CH); Michler, Markus, 6800 Feldkirch (AU); Walser, Andreas, 9056 Grais (CH); Paredes, Stephan, 9000 St. Gallen (CH)
(74) Vertreter: Schneider Feldmann AG Patent- und Markenanwälte

(56) Entgegenhaltungen:
- EP-A- 0 911 658
- WO-A-00/60392
- WO-A-02/057821
- DE-C1- 19 616 015
- US-A- 5 562 838
- US-A- 5 671 243
- US-A- 5 853 626
- US-A- 5 987 202
- US-A1- 2003 142 896
- US-B1- 6 347 103

## Beschreibung

Die Erfindung liegt auf dem Gebiet der optischen Koppler für Lichtwellenleiter und betrifft ein Verfahren zur Herstellung eines optischen Bauteils, gemäss dem Oberbegriff des unabhängigen Patentanspruchs. Die erfindungsgemässen optischen Bauteile können Ausdehnungen im Bereich von einigen Zentimetern bis zu einigen Metern haben. Derartige optische Bauteile werden hauptsächlich für die optische Datenübertragung benötigt und finden zum Beispiel in der Telekommunikation, in der Medizinaltechnik, in der Sensorik, im Fahrzeug- oder Flugzeugbau, in der Industrie-, Gebäude- oder Steuerungstechnik Verwendung. Besonders vorteilhafte Ausführungsformen sind Leiterplatten, die sowohl elektrische als auch optische Strukturen aufweisen.

Lichtwellenleiter können durch Beschichten eines Substrats und anschliessendes photolithographisches Strukturieren der Schicht hergestellt werden. Ein derartiges Herstellungsverfahren ist zum Beispiel aus der DE-197'32'506 A1 bekannt. Demnach wird auf dem Substrat eine Schicht aus flüssigem, lichtempfindlichem Material, bspw. einem UV-aushärtbarem Polymer, aufgebracht. Die Schicht wird mittels einer inkohärenten Lichtquelle direkt beschrieben, um Wellenleiterstrukturen zu bilden. Durch das Direktschreiben wird das lichtempfindliche Material selektiv belichtet und ausgehärtet. Nach erfolgter Belichtung wird das nicht ausgehärtete Beschichtungsmaterial entfernt. Mit diesem Verfahren lassen sich Multimode-Wellenleiter und -Strukturen mit Kernbreiten von ca. 20 µm oder mehr herstellen.

Für praktische Anwendungen müssen die Wellenleiter verlustarm an andere Bauteile angekoppelt werden, bspw. ein auf einer optischen Backplane-Leiste befindlicher Wellenleiter an ein Prozessorboard. Dies geschieht mittels Schnittstellen, welche zum Beispiel als Steckerelemente ausgeführt sein können und auf der Wellenleiterseite geeignete optische Komponenten wie Ein- bzw. Auskoppelspiegel beinhalten.

Ein Verfahren zur Herstellung von Wellenleitern mit optischen Komponenten ist zum Beispiel aus der EP-0'911'658 A1 bekannt. Die optischen Komponenten werden an vorgegebenen Auskoppelstellen auf einem Substrat aufgebracht und in einer Wellenleiterschicht eingebettet. Die Wellenleiterstruktur wird nach dem Aufbringen der optischen Komponenten auf dem Substrat durch Direktschreiben mit einer inkohärenten Lichtquelle hergestellt. Danach wird wiederum das nicht ausgehärtete Beschichtungsmaterial entfernt.

Eine entscheidende Rolle für eine verlustarme Ein- und Auskopplung spielt die exakte gegenseitige Positionierung von Wellenleiter und optischer Komponente. Schon eine Versetzung um einen Bruchteil der Kernbreite führt zu einer beträchtlichen Verminderung des Kopplungswirkungsgrads und somit zu Lichtverlusten. Lichtverluste müssen jedoch in optischen Schaltkreisen vermieden werden, weil sie immer das Signal-Rausch-Verhältnis am Ausgang vermindern. Aus diesem Grund werden viele gemäss dem in der EP-0'911'658 A1 beschriebenen Verfahren hergestellte Wellenleiter unbrauchbar sein, selbst wenn versucht wird, die Platzierung der optischen Komponenten und das Direktschreiben der Wellenleiterstruktur so genau und reproduzierbar wie möglich auszuführen. Das Verfahren liefert also eine hohe Ausschussrate.

Aus den Schriften WO-00/60392 und US-5,562,838 sind Verfahren zur Herstellung von optischen Bauteilen bekannt, bei welchen zuerst optische Komponenten auf ein Substrat aufgebracht werden. Danach werden Positionen und Ausrichtungen der optischen Komponenten vermessen. Auf dem Substrat werden Streifenwellenleiter in Abhängigkeit der festgestellten Positionen und Ausrichtungen hergestellt, so dass sie bezüglich der optischen Komponenten exakt ausgerichtet sind.

US-Patent Nr. 5,832,150 offenbart einen Koppler für Glasfasern. Zu seiner Herstellung werden Enden einer Vielzahl von zu koppelnden Glasfasern in einem Gehäuse fixiert. Die Faserenden werden zusammen mit einem Endstück des Gehäuses derart geschliffen und poliert, dass an jedem Faserende eine längliche, flache Koppelfacette und eine zylindrisch gekrümmte reflektierende Fläche entsteht. Die gekrümmte Fläche definiert einen Linienfokus, der etwas oberhalb der Koppelfacette liegt. In den Linienfokus kann zum Beispiel ein Laserdiodenarray eingebracht werden. Der von einer Laserdiode ausgesandte Lichtstrahl mit elliptischem Querschnitt wird über die Koppelfacette in eine entsprechende Glasfaser eingekoppelt und von der zylindrischen reflektierenden Fläche abgelenkt sowie kollimiert, so dass es sich annähernd parallel zur Faserachse in der Faser ausbreitet. Ein Nachteil dieses Kopplers ist seine aufwendige Herstellung. Ausserdem kann ein solcher Koppler nur für frei stehende Lichtleitfasern, nicht aber für auf einem Substrat aufgebrachte Wellenleiterstrukturen verwendet werden.

Die Schrift US-2003/0142896-A1 offenbart ein optisches Bauteil mit einem Substrat, einem auf dem Substrat aufgebrachten konkaven Spiegel zur Änderung des optischen Pfades vertikal einfallenden Lichtes in eine relativ zur Oberfläche des Substrats horizontale Richtung, und einem auf dem Substrat aufgebrachten Wellenleiter zur Leitung des vom Spiegel darin einkoppelten Lichts.

Es existieren auch andere Ausführungen derartiger Koppler, die aber meist individuelle Einzellösungen für bestimmte Anwendungen sind. Sie sind deshalb technisch entsprechend kompliziert und teuer in der Herstellung und Beschaffung.

Es ist eine Aufgabe der vorliegenden Erfindung, ein optisches Bauteil mit einem optischen Koppelelement zu schaffen, wobei das optische vorzugsweise einfach, kostengünstig und in Massenproduktion hergestellt werden kann, und sich für viele verschiedene Anwendungen eignet.

Ferner ist es Aufgabe der Erfindung, ein Verfahren zur Herstellung von optischen Bauteilen anzugeben, welches eine exakte gegenseitige Positionierung des Wellenleiters und des Koppelelementes ermöglicht. Dadurch soll der Kopplungswirkungsgrad optimiert und die Lichtdämpfung im Bauteil auf ein Minimum reduziert werden. Eine möglichst ausschussfreie Produktion wird angestrebt.

Diese und andere Aufgaben werden gelöst durch das Herstellungsverfahren wie es in dem unabhängigen Patentanspruch definiert ist Vorteilhafte Ausführungsformen sind in den abhängigen Patentansprüchen angegeben.

Im Unterschied zur US-5,832,150 wird bei dem gemäss der vorliegenden Erfindung hergestellten optischen Bauteil die Aus- bzw. Einkopplung von der Lichtablenkung und Lichtkollimation örtlich klar getrennt. Zeitlich betrachtet werden der Vorgang der Aus- bzw. Einkopplung und der Vorgang der Lichtablenkung und Lichtkollimation gegenüber der US-5,832,150 miteinander vertauscht. Dadurch wird erreicht, dass das Koppelelement ohne die zu koppelnde Wellenleiterstruktur hergestellt werden kann. So wird die Herstellung einfacher und kostengünstiger. Sie kann standardisiert und auf grosse Stückzahlen ausgerichtet werden. Das Koppelelement kann auf einem Substrat mit wellenleitenden Strukturen, zum Beispiel Streifenwellenleitern, eingesetzt werden.

Das mit dem erfindungsgemässen Verfahren hergestellte optische Bauteil beinhaltet eine Wellenleiterstruktur und ein Koppelelement zur optischen Kopplung der Wellenleiterstruktur mit einer weiteren optischen Komponente. Die Wellenleiterstruktur und das Koppelelement sind auf einem gemeinsamen Substrat angebracht. Das Koppelelement beinhaltet eine reflektierende gekrümmte Fläche zur gleichzeitigen Änderung der Ausbreitungsrichtung und der Form der Wellenfronten von Licht, das sich zwischen der Wellenleiterstruktur und der optischen Komponente ausbreitet.

Im erfindungsgemässen Verfahren zur Herstellung des erfindungsgemässen optischen Bauteils werden ein Substrat und ein erfindungsgemässes Koppelelement bereitgestellt. Das Koppelelement wird auf das Substrat aufgebracht. Auf das Substrat und das Koppelelement wird eine Unterlagsschicht aufgebracht. Nach dem Aufbringen des Koppelelementes wird die Lage des optischen Elementes auf dem Substrat vermessen. Aufgrund der Vermessung wird ein bezüglich der Lage des Koppelelementes geeigneter Verlauf einer Wellenleiterstruktur ermittelt. Die Wellenleiterstruktur wird mit dem ermittelten geeigneten Verlauf auf der Unterlagsschicht hergestellt.

Zum Auskoppeln von Licht aus einer Wellenleiterstruktur wird das Licht aus der Wellenleiterstruktur ausgekoppelt, trifft danach auf die reflektierende gekrümmte Fläche auf, und seine Ausbreitungsrichtung und die Form seiner Wellenfronten werden gleichzeitig von der gekrümmten reflektierenden Fläche geändert.

Zum Einkoppeln von Licht in eine Wellenleiterstruktur trifft das Licht auf die reflektierende gekrümmte Fläche auf, seine Ausbreitungsrichtung und die Form seiner Wellenfronten werden von der gekrümmten reflektierenden Fläche gleichzeitig geändert, und das Licht wird danach in die Wellenleiterstruktur eingekoppelt.

Die Änderung der Ausbreitungsrichtung bedeutet eine Ablenkung des Lichtes durch die reflektierende gekrümmte Fläche vorzugsweise um ca. 90°. Die Änderung der Form der Wellenfronten kann eine Kollimation, eine Fokussierung, die Erzeugung eines divergenten Lichtstrahls oder andere Beeinflussungen umfassen.

Eine bevorzugte Anwendung findet die Erfindung bei Bauteilen, die elektrische und optische Funktionen miteinander kombinieren. Zu diesem Zweck kann das verwendete Substrat eine elektrische Leiterplatte sein. Die optischen Komponenten und Wellenleiterstrukturen verleihen der elektrischen Leiterplatte einen erheblichen Mehrwert.

Zusammenfassend kann gesagt werden, dass die Erfindung ein Verfahren zur Herstellung einer optischen Schnittstelle schafft, welche im Wesentlichen durch die folgenden Parameter charakterisiert ist:
- Position des Austrittsflecks (bezüglich der Substratebene, also x, y);
- Dimension des Austrittsflecks (zum Beispiel annähernd quadratisch mit einer Seitenlänge von ca. 300 µm);
- Intensitätsverteilung des Austrittsflecks (zum Beispiel gaussförmig);
- Divergenz des austretenden Lichtstrahls (zum Beispiel 4°).

Diese Parameter müssen bekannt sein, wenn ein anderes optisches Bauteil an das optische Bauteil angekoppelt werden soll. Um andere Parameter braucht sich der Hersteller oder Lieferant des anderen optischen Bauteils nicht zu kümmern. Somit schafft die Erfindung einen Standard für derartige Schnittstellen zwischen zwei optischen Bauteilen und löst viele bisherige Probleme. Ein solcher Standard kann interessant sein für Hersteller oder Lieferanten von Detektoren, Emittern, Transmittern und/oder Steckern.

Unter dem Begriff "Licht" wird in dieser Schrift jegliche Art elektromagnetischer Strahlung verstanden, insbesondere auch sichtbares Licht, Infrarot-Strahlung (IR) oder Ultraviolett-Strahlung (UV).

Nachfolgend werden bevorzugte Ausführungsformen der Erfindung anhand der Zeichnungen detailliert erklärt. Dabei zeigen schematisch:
- Figur 1: ein Koppelelement für den Einsatz in einem erfindungsgemässen Verfahren in einer perspektivischen Ansicht,
- Figur 2: einen Teil eines vergleichbaren optischen Bauteils in einer perspektivischen Ansicht,
- Figur 3: den Teil des vergleichbaren optischen Bauteils in einem Querschnitt,
- Figur 4: eine vergrösserte Detailansicht eines Ausschnitts von Figur 3,
- Figur 5: einen Strahlengang in der Detailansicht von Figur 4,
- Figur 6: ein Flussdiagramm des erfindungsgemässen Herstellungsverfahrens und
- Figur 7: verschiedene Schritte des erfindungsgemässen Herstellungsverfahrens in Querschnitten.

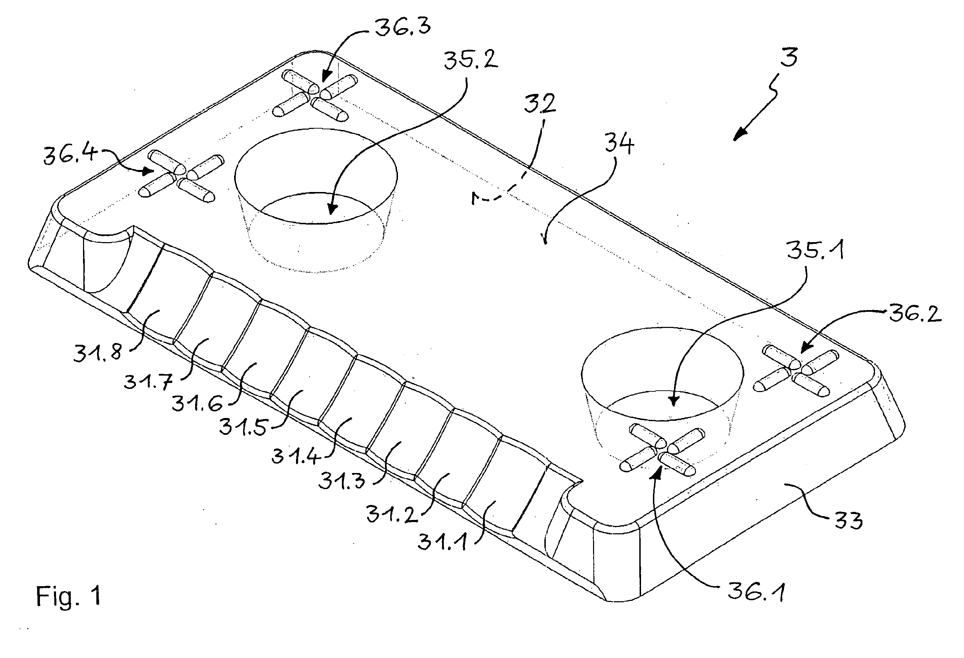

Eine bevorzugte Ausführungsform eines Koppelelements 3 für den Einsatz in einem erfindungsgemässen Verfahren zeigt Figur 1. Dabei handelt es sich um ein autonomes Element, das in grossen Mengen kostengünstig hergestellt werden kann. Es kann bspw. durch Abformung aus einem spritzgusstauglichen Kunststoff wie Polykarbonat (PC), Polymethylmethacrylat (PMMA) oder Polyetheretherketon (PEEK) hergestellt sein. Mit dieser Methode können standardisierte Komponenten in grossen Stückzahlen mit engen Toleranzen und zu niedrigen Kosten hergestellt werden. Um Strukturen in Dimensionen von wenigen 100 µm herzustellen, können Verfahren wie Mikroprägen oder Mikrospritzgiessen eingesetzt werden.

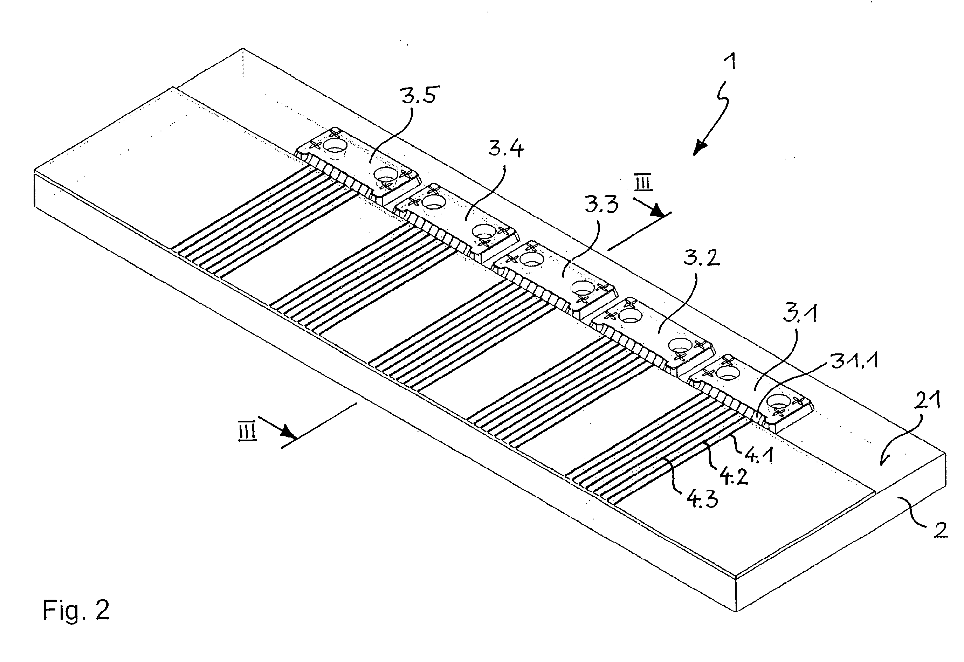

Die Grundform des Koppelelementes 3 kann zum Beispiel ein Pyramidenstumpf mit rechteckiger Grundfläche 32 sein, wobei die Grundfläche 32 ca. 6 mm x 3 mm messen und die Höhe ca. 0.5 mm betragen kann. Im Ausführungsbeispiel von Figur 1 ist das Koppelelement 3 mit zwei konischen, sich zur Grundfläche 32 hin verjüngenden Durchgangslöchern 35.1, 35.2 ausgestattet. Diese können der Befestigung und/oder Positionierung einerseits des Koppelelementes 3 auf einem Substrat 2 (vgl. Fig. 2) und/oder, andererseits, eines (nicht dargestellten) weiteren Elementes wie zum Beispiel eines Steckers auf dem Koppelelement 3 dienen. Das Koppelelement 3 kann mit Ausrichtmarkierungen 36.1-36.4 versehen sein, welche eine genaue Vermessung seiner Lage auf einem Substrat 2 (vgl. Fig. 2) erleichtern. Im Ausführungsbeispiel von Figur 1 sind auf einer Oberseite 34 des Koppelelementes 3 vier derartige Ausrichtmarkierungen 36.1-36.4 vorhanden.

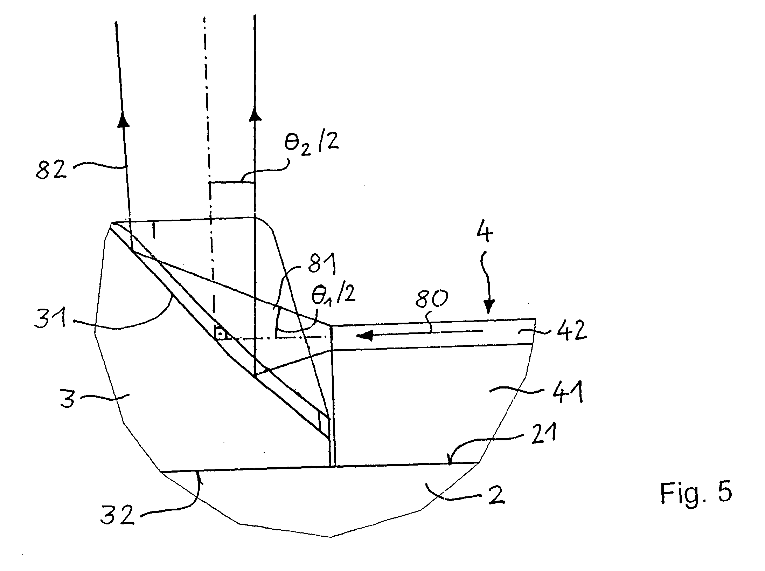

Das Koppelelement 3 beinhaltet mindestens eine reflektierende gekrümmte Fläche 31.1-31.8. Um mit einem einzigen Koppelelement 3 mehrere Lichtkanäle bearbeiten zu können (vgl. Fig. 2), ist es vorteilhaft, mehrere derartige Flächen 31.1-31.8 vorzusehen, bspw. zwischen 4 und 32 und vorzugsweise zwischen 12 und 16; im Ausführungsbeispiel von Figur 1 sind es deren acht. Die acht reflektierenden gekrümmten Flächen 31.1-31.8 sind zueinander identisch und in einer Reihe nebeneinander angeordnet. Ihre Abmessungen betragen jeweils ca. 0.5 mm x 0.6 mm oder weniger, bspw. ca. 0.25 mm x 0.3 mm. Jede reflektierende gekrümmte Fläche 31.1-31.8 ist annähernd rotationsparabolisch gekrümmt. Form und Krümmung der reflektierenden gekrümmten Flächen 31.1-31.8 müssen der jeweiligen Anwendung angepasst sein. Selbstverständlich sind auch andere Formen möglich, zum Beispiel zylindrische, sphärische, hyperbolische, elliptische oder weitere. Die reflektierenden gekrümmten Flächen 31.1-31.8 bilden einen Teil einer Aussenfläche, zum Beispiel der Mantelfläche 33, des Koppelelementes 3 und sind, von aussen betrachtet, konkav gekrümmt. Sie sind gegenüber der Grundfläche 32 des Koppelelementes 3 im Wesentlichen um 45° geneigt, um Licht, das sich entlang einer zur Grundfläche 32 parallelen Richtung ausbreitet, derart abzulenken, dass es sich nach der Ablenkung entlang einer zur Grundfläche 32 im Wesentlichen senkrechten Richtung ausbreitet (vgl. Fig. 5). Die reflektierenden gekrümmten Flächen 31.1-31.8, und möglicherweise auch weitere Oberflächenteile des Koppelelementes 3, weisen für das betreffende Licht eine hohe Reflektivität von vorzugsweise über 0.9 auf. Zu diesem Zweck sind sie zum Beispiel metallisch verspiegelt, bspw. mit Gold, Silber oder Aluminium, und/oder mit einer reflektierenden dielektrischen Schicht oder Schichtenfolge beschichtet.

Figur 2 zeigt einen Teil eines vergleichbaren optischen Bauteils 1. Als Basis für das optische Bauteil 1 dient ein Substrat 2. Es kann aus einem für Lichtwellenleiter üblichen Material wie Glas, einem Halbleitermaterial oder einem Kunststoff wie Polymethylmethacrylat (PMMA) oder FR4® bestehen. Auch andere, weniger übliche Materialien kommen in Frage, zum Beispiel glasfaserverstärkte Harzsysteme wie Epoxy, Polyimid oder PTFE (Teflon®). Das Substrat 2 kann auch eine bereits einseitig, doppelseitig oder in mehreren Lagen mit elektrischen und/oder optischen Leiterbahnen und/oder Komponenten ausgestattete Leiterplatte oder eine Innenlage oder Aussenlage für eine solche Leiterplatte sein.

Das optische Bauteil 1 beinhaltet mindestens ein Koppelelement 3.1-3.5; im Ausführungsbeispiel von Figur 2 sind es deren fünf. Jedes Koppelelement 3.1-3.5 ist über seine Grundfläche 32 (siehe Fig. 1) auf dem Substrat 2 aufgebracht und fest mit dem Substrat 2 verbunden, bspw. aufgeklebt oder aufgelötet.

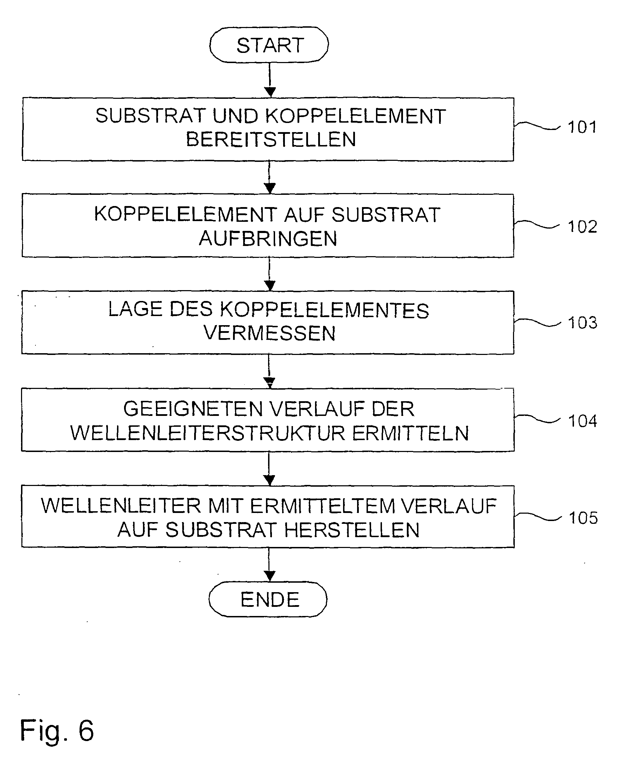

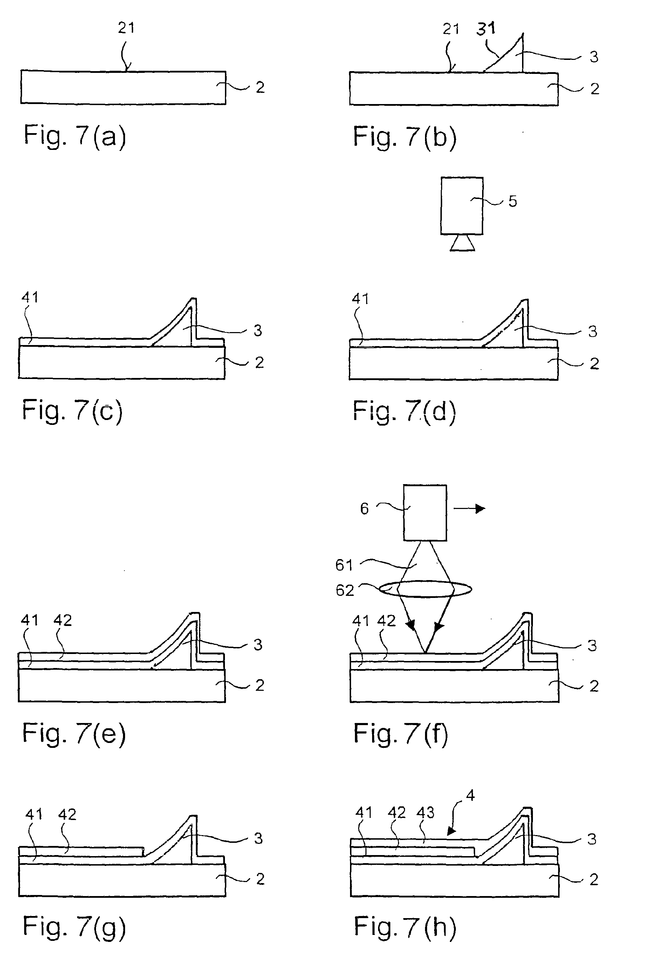

Ferner beinhaltet das optische Bauteil 1 mindestens eine Wellenleiterstruktur 4.1, 4.2, ... Im Ausführungsbeispiel von Figur 2 sind pro Koppelelement 3.1-3.5 acht zueinander parallele Streifenwellenleiter 4.1, 4.2, ... vorhanden, im Ganzen also 40 Streifenwellenleiter 4.1, 4.2, ... Jedem Streifenwellenleiter 4.1, 4.2, ... ist eine reflektierende gekrümmte Fläche 31.1, 31.2, ... zugeordnet. Ein Streifenwellenleiter 4.1 und die ihm zugeordnete Fläche 31.1 bzw. das Koppelelement 3.1 sind derart gegenseitig angeordnet, dass aus einem Ende des Streifenwellenleiters 4.1 ausgekoppeltes Licht auf die reflektierende gekrümmte Fläche 31.1 fällt und von diesem abgelenkt und kollimiert wird; vgl. Fig. 5. Selbstverständlich können sich weitere optische, elektronische, optoelektronische, mechanische und/oder andere Elemente auf dem Substrat 2 befinden, die jedoch der Einfachheit halber in Figur 2 nicht eingezeichnet sind. Ein bevorzugtes Herstellungsverfahren für das optische Bauteil 1 wird anlässlich der Figuren 6 und 7 beschrieben.

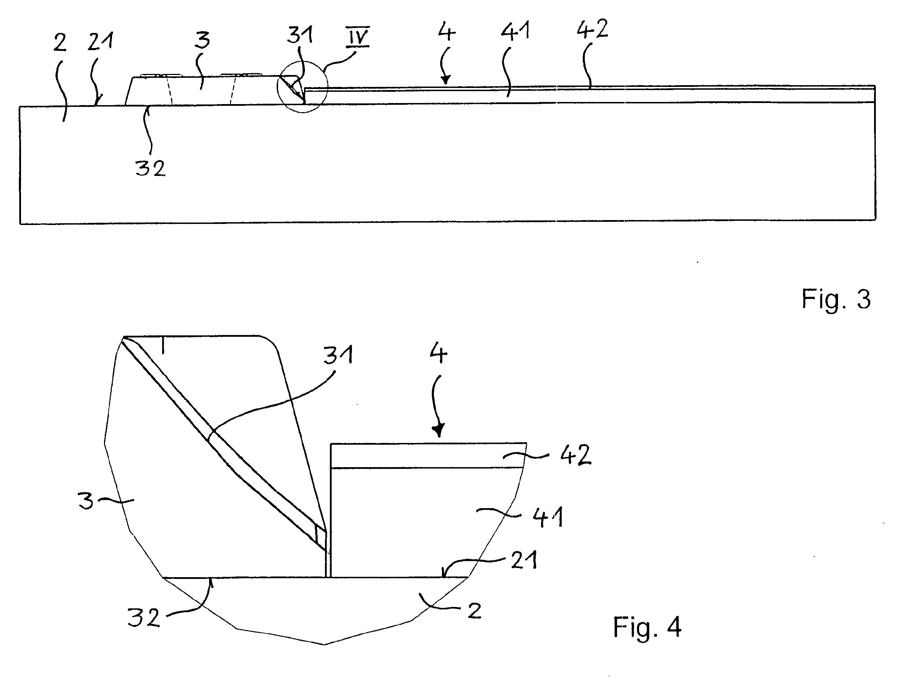

Figur 3 zeigt einen Querschnitt entlang Linie III-III von Figur 2. Die einander entsprechenden Elemente sind mit denselben Bezugszeichen wie in Figur 2 bezeichnet, so dass sie hier keiner weiteren Erläuterung bedürfen. Einzig auf die Durchnummerierung der eventuell mehrfach vorhandenen Elemente wird in Figur 3 verzichtet, so dass also bspw. für das Koppelelement das Bezugszeichen 3, für den Streifenwellenleiter das Bezugszeichen 4 verwendet wird.

Eine Koppelstelle, d. h. ein Ende eines Streifenwellenleiters 4 und einen Teil eines Koppelelementes 3, ist als vergrösserte Detailansicht des Ausschnitts IV von Figur 3 in Figur 4 dargestellt. Der Streifenwellenleiter 4 besteht in den vereinfachten Darstellungen der Figuren 3 und 4 im Wesentlichen aus einer auf dem Substrat 2 aufgebrachten Unterlagsschicht 41 und einer Kernschicht 42. In einer bevorzugten Ausführungsform befindet sich jedoch auf der Kernschicht 42 noch eine Deckschicht 43, wie in Figur 7(h) dargestellt. Die Deckschicht 43, wie auch die Unterlagsschicht 41, überdeckt typischerweise auch das Koppelelement 3; vgl. Figur 7(h).

Einen beispielhaften Strahlengang in der Koppelstelle von Figur 4 zeigt schematisch Figur 5. Die Darstellung ist vereinfacht und berücksichtigt zum Beispiel keine Brechungen von Licht an Übergängen zwischen zwei Medien. Im Streifenwellenleiter 4 wird Licht 80 geführt. Es tritt aus dem Ende des Streifenwellenleiters 4 als Licht 81 mit einer grossen Divergenz θ₁/2 von typischerweise 19° in Luft bzw. 12° in einer Deckschicht 43 (vgl. Fig. 7(h)) aus. Die reflektierende gekrümmte Fläche 31 ist im Fall eines kollimierten Ausgangsstrahls 82 im Brennpunkt des durch die reflektierende gekrümmte Fläche 31 gebildeten Paraboloids angeordnet. Es ist vorteilhaft, ein Paraboloid mit kurzer Brennweite zu wählen, damit möglichst viel vom austretendem Licht 81 auf die reflektierende gekrümmte Fläche 31 fällt und reflektiert wird. Der Ablenkwinkel beträgt vorzugsweise im wesentlichen 90°, so dass sich reflektiertes Licht 82 senkrecht von der Substratfläche 21 weg ausbreitet. Dank der Krümmung der reflektierenden gekrümmten Fläche 31 wird das Licht 81 auch kollimiert, d. h. das Wellenleiterende wird von der reflektierenden gekrümmten Fläche 31 im wesentlichen ins Unendliche abgebildet oder besitzt zumindest eine möglichst kleine Divergenz. Die Divergenz θ₂/2 des abgelenkten, kollimierten Lichtes 82 ist hauptsächlich auf die endliche Ausdehnung der Kernschicht 42 des Wellenleiters 4 zurück zu führen und kann weniger als 6° und vorzugsweise weniger als 4° betragen. Das kollimierte Licht 82 nähert sich also gut der Freistrahloptik an. Oberhalb des Koppelelementes, im Bereich des kollimierten Lichts 82, kann eine weitere (nicht eingezeichnete) optische Komponente, bspw. ein Stecker mit Glasfasern oder ein optisches Bauteil wie dasjenige von Figur 2, angebracht und optisch an das optische Bauteil 1 angekoppelt werden. Die Kollimation des austretenden Lichtes 82 lässt bezüglich der Höhe der weiteren optischen Komponente über dem Substrat 2 eine grosse Variation von einigen Millimetern zu.

Selbstverständlich kann der oben diskutierte Strahlengang auch zeitlich umgekehrt werden, so dass einfallendes, annähernd parallel begrenztes Licht mittels der reflektierenden gekrümmten Fläche 31 in den Wellenleiter 4 eingekoppelt wird.

Wichtige Schritte des erfindungsgemässen Verfahrens zur Herstellung eines optischen Bauteils sind im Flussdiagramm von Figur 6 aufgeführt; für weitere Einzelheiten wird auf Figur 7 verwiesen. Es wird ein Substrat bereitgestellt 101. Auf das Substrat wird ein Koppelelement aufgebracht 102. Die Lage des Koppelelementes auf dem Substrat wird vermessen 103. Aufgrund der Vermessung 103 wird ein bezüglich der Lage des Koppelelementes geeigneter Verlauf einer Wellenleiterstruktur ermittelt 104. Mit dem ermittelten geeigneten Verlauf wird auf dem Substrat eine Wellenleiterstruktur hergestellt 105.

Figur 7 zeigt in schematischen Querschnitten verschiedene Schritte des erfindungsgemässen Verfahrens, die nachfolgend erläutert werden.

Wie bereits erwähnt, wird zunächst ein Substrat 2 bereitgestellt, wie es in Figur 7(a) angedeutet ist. Das Substrat 2 weist vorzugsweise eine im wesentlichen plane Fläche 21 auf. Auf mögliche Substratmaterialien wurde schon anlässlich von Fig. 2 eingegangen.

In einem zweiten Schritt, gemäss Figur 7(b), wird auf das Substrat 2 mindestens ein Koppelelement 3 mit einer reflektierenden gekrümmten Fläche 31 aufgebracht. Das Koppelelement 3 ist hier nur schematisch dargestellt. Es liegt mit einer planen Grundfläche 32 auf der planen Fläche 21 des Substrats 2.

Das Koppelelement 3 kann automatisch, bspw. von einem (nicht dargestellten) Roboter - einer sogenannten Pick-and-place-Einheit -, oder manuell, mit oder ohne Zuhilfenahme entsprechender Werkzeuge, auf das Substrat 2 aufgebracht werden. Im Normalfall sind die Stellen, an denen die Koppelelemente 3 aufzubringen sind, durch einen entsprechenden Plan vorgegeben. Sie werden in elektronischer Form an den Roboter übermittelt oder mittels Markierungen auf dem Substrat 2 angezeigt. Auch mechanische Positionierhilfen, etwa in Form von einander entsprechenden Nuten und Vorsprüngen, sind möglich. Die Positionierung ist dank dem erfindungsgemässen Verfahren nicht kritisch, d. h. kann relativ ungenau erfolgen. Das Koppelelement 3 wird vorzugsweise auf dem Substrat 2 befestigt, bspw. durch einen Kleb- oder Lötprozess. Die Befestigung sollte möglichst positionstreu sein.

Die ganze Substratfläche 21 oder zumindest ein Teil davon wird anschliessend mit einer Unterlagsschicht oder unteren Mantelschicht 41 überzogen, wie in Figur 7(c) gezeigt. Die Unterlagsschicht 41 dient dazu, einerseits eine glatte Unterlage für die Wellenleiter-Kernschicht 42 bereitzustellen (siehe Fig. 7(e)), und andererseits die Kernschicht 42 vom Substrat 2 optisch zu isolieren, um Absorption und/oder Streuung des in der Kernschicht 42 geführten Lichts durch das Substrat 2 zu verhindern. Die Unterlagsschicht 41 kann zum Beispiel eine vorzugsweise lichtaushärtbare Polymerschicht sein, die in flüssigem Zustand auf das Substrat 2 aufgebracht wird. Das Aufbringen kann bspw. mittels Auftragens mit einer Lackhantel, mittels Aufschleuderns durch Rotation, mittels des Inking-Verfahrens oder mittels der Spray-coating-Technik erfolgen. Das Koppelelement wird mit beschichtet. Die Unterlagsschicht 41 wird vollflächig ausgehärtet, bspw. mittels Belichtung durch eine (nicht dargestellte) UV-Lampe. Typische Dicken der Unterlagsschicht 41 im ausgehärteten Zustand liegen zwischen 10 µm und 500 µm, vorzugsweise zwischen 50 µm und 200 µm, und bspw. um 100 µm. Typische Brechungsindizes der Unterlagsschicht 41 für sichtbares Licht liegen zwischen 1.47 und 1.57, und typischerweise um 1.52.

Figur 7(d) zeigt schematisch, wie die Lage des Koppelelementes bspw. mittels mindestens einer Kamera 5 vermessen wird. Es ist vorteilhaft, diesen Schritt erst nach dem Aufbringen der Unterlagsschicht 41 vorzunehmen, wenn eine Lageveränderung des Koppelelementes 3 sehr unwahrscheinlich ist. Der Vermessungsschritt kann aber alternativ vor dem Aufbringen der Unterlagsschicht 41 (Fig. 7(c)) oder nach dem Aufbringen der Kernschicht 42 (Fig. 7(e)) erfolgen.

Auf jeden Fall muss der Vermessungsschritt nach dem Aufbringen des Koppelelementes (Fig. 7(b) und vor der Strukturierung der Wellenleiterstruktur 4 (Fig. 7(f)) erfolgen.

Ziel der Vermessung ist eine möglichst genaue Feststellung der Lage des Koppelelementes 3, bezogen auf das Substrat 2 oder auf ein fiktives Koordinatensystem, welches auch dem Substrat 2 zugeordnet werden kann. Mit dem Begriff "Lage" ist dabei mindestens eine Ortskoordinate gemeint. In den meisten Fällen wird es jedoch nötig sein, mehr als eine Ortskoordinate zu vermessen. Wird davon ausgegangen, dass die Substratoberfläche 21 eine Ebene ist, das Koppelelement 3 sich nur auf dieser Ebene 21 gleitend bewegen kann und die genaue Form des Koppelelementes 3 bekannt ist, so sollten drei Freiheitsgrade - die beiden kartesischen Koordinaten eines wohldefinierten Punktes des Koppelelementes 3 in der Substratebene 21 und ein Winkel bezüglich einer Koordinatenachse - genügen, um die Lage des Koppelelementes 3 eindeutig zu bestimmen. Bei Bedarf können aber sehr wohl mehr als nur drei Freiheitsgrade vermessen werden - zum Beispiel jeweils zwei kartesische Koordinaten von zwei vorbestimmten Punkten auf dem Koppelelement 3. Durch sechs Freiheitsgrade ist bekanntlich die Lage eines Körpers im Raum eindeutig bestimmt. Aber auch eine Vermessung von mehr als sechs Freiheitsgraden kann sinnvoll sein, um durch die so erzielte Redundanz eine grössere Genauigkeit und Zuverlässigkeit der Lagevermessung zu erreichen.

Die von der Kamera 5 oder den Kameras aufgenommenen Bilder werden ausgewertet, um die Lage des Koppelelementes 3 zu ermitteln. Die Auswertung kann manuell oder vorzugsweise automatisch, bspw. durch einen (nicht dargestellten) digitalen Prozessor, erfolgen. Sie wird bspw. Methoden der Triangulation verwenden. Zur Erleichterung der Vermessung können geeignete Ausrichtmarkierungen 36.1-36.4 am Koppelelement 3 (vgl. Fig. 1) und/oder am Substrat 2 angebracht werden; dies ist aber nicht zwingend nötig. Für die Auswertung können Methoden der optischen Mustererkennung angewendet werden. Geeignete Kameras 5, Triangulationsverfahren, Verfahren zur Bildauswertung und Methoden der optischen Mustererkennung sind bekannt. Es können bekannte, auf dem Markt erhältliche Triangulationssysteme eingesetzt werden.

Aufgrund der Vermessung wird nun ein bezüglich der Lage des mindestens einen Koppelelementes 3 geeigneter Verlauf der zu realisierenden Wellenleiterstruktur ermittelt. "Geeignet" heisst zum Beispiel, dass ein einer reflektierenden gekrümmten Fläche des Koppelelementes 3 zugeordnetes Ende eines Wellenleiters 4 (vgl. Fig. 7(h) derart positioniert und ausgerichtet wird, dass ein möglichst grosser Anteil von aus dem Wellenleiter 4 austretendem Licht auf die reflektierende gekrümmte Fläche 31 fällt, von dieser kollimiert wird und sich danach senkrecht zur Substratoberfläche ausbreitet. "Geeignet" kann zum Beispiel ferner heissen, dass die Biegungen eines zwischen zwei Punkten verlaufenden Streifenwellenleiters 4 minimal gewählt werden, um Lichtverluste gering zu halten, usw.

Auf die Unterlagsschicht 41 wird die eigentliche Wellenleiterschicht, die Kernschicht 42, aufgebracht, wie in Figur 7(e) dargestellt. Auch diese Beschichtung kann vollflächig oder nur teilweise erfolgen. Zum Aufbringen der Kernschicht 42 können dieselben oder andere Mittel wie für die Unterlagsschicht 41 verwendet werden. Die Kernschicht 42 kann zum Beispiel aus einem lichtaushärtbaren Polymer bestehen. Typische Dicken der Kernschicht 42 im ausgehärteten Zustand liegen zwischen 1 µm und 500 µm und hängen stark von der jeweiligen Anwendung ab. Um die Lichtleitung zu ermöglichen, muss für das verwendete Licht der Brechungsindex der Kernschicht 42 im ausgehärteten Zustand grösser sein als der Brechungsindex der Unterlagsschicht 41 (und der Deckschicht 43, vgl. Fig. 7(h)) im ausgehärteten Zustand. Typische Brechungsindizes der Kernschicht 42 für sichtbares Licht liegen zwischen 1.50 und 1.60, und bspw. um 1.56.

Nun wird die gewünschte Wellenleiterstruktur mit dem ermittelten geeigneten Verlauf realisiert. Dies kann bspw. mittels gezielter partieller Aushärtung und anschliessender Rückentwicklung erfolgen. Die partielle Aushärtung kann bspw. durch Direktschreiben (Laser Direct Imaging, LDI) mit einer entsprechenden Lichtquelle 6, zum Beispiel einem UV-Halbleiterlaser, in der Kernschicht 42 erfolgen, wie in Figur 7(f) angedeutet. Das von der Lichtquelle ausgesandte Licht 61 wird vorzugsweise von einem optischen System 62 auf die Kernschicht 42 fokussiert. Die Lichtquelle 6 wird dabei, zusammen mit dem optischen System 62, relativ zum Substrat 2 bewegt und geführt, zum Beispiel auf einem (nicht dargestellten) automatischen Präzisions-Verschiebetisch, dessen Steuerung durch einen digitalen Prozessor aufgrund des ermittelten Wellenleiterverlaufs erfolgt. Durch Wechselwirkung mit dem auftreffenden Licht 61 härtet das Material der Kernschicht 42 an den beschriebenen Stellen aus. Geeignete Lichtquellen 6 und optische Systeme 62 zur Fokussierung des Lichts 61 sind bekannt.

Nach dem Direktschreiben wird das nicht ausgehärtete Beschichtungsmaterial entfernt bzw. rückentwickelt. Dies kann zum Beispiel durch Auswaschen mit einem geeigneten Lösungsmittel, bspw. Aceton oder einem Acetonersatzprodukt, erfolgen. Danach bleiben, wie in Figur 7(g) gezeigt, die gewünschten Wellenleiterstrukturen mit dem ermittelten geeigneten Verlauf übrig.

In einem letzten Schritt wird auf die strukturierte Kernschicht 42 eine Deckschicht oder obere Mantelschicht 43 aufgebracht und nötigenfalls ausgehärtet. Dies ist in Figur 7(h) dargestellt. Die Deckschicht 43 dient dazu, die lichtleitende Kernschicht 42, aber auch das Koppelelement 3 vor äusseren Einflüssen wie Verschmutzung, Feuchtigkeit oder Beschädigung zu schützen und optisch von der Umgebung zu isolieren. Die Deckschicht 43 kann, muss aber nicht, bezüglich Material und Geometrie identisch sein mit der Unterlagsschicht 41. Typische Dicken der Deckschicht 43 im ausgehärteten Zustand liegen zwischen 10 µm und 500 µm, vorzugsweise zwischen 50 µm und 200 µm, und bspw. um 100 µm. Typische Brechungsindizes der Deckschicht 43 für sichtbares Licht liegen zwischen 1.47 und 1.57, und bspw. um 1.52. Jedenfalls muss die Deckschicht 43 einen kleineren Brechungsindex aufweisen als die Kernschicht 42. Auch die Beschichtung mit der Deckschicht 43 kann vollflächig oder nur teilweise erfolgen. Zum Aufbringen und Aushärten der Deckschicht 43 können dieselben oder andere Mittel wie für die Unterlagsschicht 41 verwendet werden.

Es sei hier bemerkt, dass die Strukturierung der Wellenleiterstruktur 4 nicht notwendigerweise an der Kernschicht 42 erfolgen muss. So kann statt der Kernschicht 42 die Deckschicht 43 strukturiert werden. Es ist auch denkbar, die Unterlagsschicht 41 entsprechend zu strukturieren und die Kernschicht 42 vollflächig unstrukturiert zu belassen; wegen Lichtabsorption im Substrat 2 würde das Licht nur dort geführt, wo eine Unterlagsschicht 41 vorhanden ist. Es können auch mehrere Schichten 41-43 der Wellenleiterstruktur 4 strukturiert werden.

### Bezugszeichenliste:

- 1: optisches Bauteil
- 2: Substrat
- 21: ebene Substratfläche
- 3: Koppelelement
- 31: reflektierende gekrümmte Fläche
- 32: Grundfläche
- 33: Mantelfläche
- 34: Oberseite
- 35: Durchgangslöcher
- 36: Ausrichtmarkierungen
- 4: Wellenleiterstruktur
- 41: Unterlagsschicht
- 42: Kernschicht
- 43: Deckschicht
- 5: Vermessungskamera
- 6: Lichtquelle
- 61: Licht zum Aushärten
- 62: optisches Fokussiersystem
- 7: Kollimationseinheit
- 71: Adapterelement
- 80: geführtes Licht
- 81: ausgekoppeltes Licht
- 82: abgelenktes, kollimiertes Licht
- 101: Bereitstellen des Substrats
- 102: Aufbringen des Koppelelementes auf Substrat
- 103: Vermessen der Lage des Koppelelementes
- 104: Ermitteln eines geeigneten Verlaufs der Wellenleiterstruktur
- 105: Herstellen einer Wellenleiterstruktur

## Patentansprüche

1. Verfahren zur Herstellung eines optischen Bauteils (1), wobei
das optische Bauteil (1) eine Weilenleiterstruktur (4) und mindestens ein Koppelelement (3) zur optischen Kopplung der Wellenleiterstruktur (4) mit einer weiteren optischen Komponente beinhaltet;
das Koppelelement (3) eine reflektierende Fläche (31.1-31.8) beinhaltet, weiche zur Änderung der Ausbreitungsrichtung von Licht (81) geeignet ist, das sich zwischen der Wellenleiterstruktur (4) und der weiteren optischen Komponente ausbreitet;
die Wellenleiterstruktur (4) und das Koppelelement (3) auf einem gemeinsamen Substrat (2) angebracht sind; und
die Wellenleiterstruktur (4) eine auf dem Substrat (2) aufgebrachte Unterlagsschicht (41) und eine Kernschicht (42) aufweist,
**dadurch gekennzeichnet, dass**
das Substrat (2) und das mindestens eine Koppelelement (3) bereitgestellt werden (101),
das Koppelelement (3) auf das Substrat (2) aufgebracht wird (102),
die Unterlagsschicht (41) auf das Substrat (2) und das mindestens eine Koppelelement (3) aufgebracht wird,
nach dem Aufbringen (102) des Koppelelements (3) die Lage des Koppelelements (3) auf dem Substrat (2) vermessen wird (103),
Aufgrund der Vermessung (103) ein bezüglich der Lage des optischen Koppelelements (3) geeigneter Verlauf einer Wellenleiterstruktur (4) ermittelt wird (104) und
die Wellenleiterstruktur (4) mit dem ermittelten geeigneten Verlauf auf der Unterlagsschicht (41) hergestellt wird (105).

2. Verfahren nach Anspruch 1, **dadurch gekennzeichnet, dass**
die Vermessung (103) mittels mindestens einer Kamera (5) und anschliessender Bildverarbeitung erfolgt.

3. Verfahren nach Anspruch 1 oder 2, **dadurch gekennzeichnet, dass**
bei der Vermessung (103) mindestens eine Ortskoordinate des Koppelelementes (3) in einem dem Substrat (2) zuordenbaren Koordinatensystem bestimmt wird.

4. Verfahren nach einem der vorangehenden Ansprüche, **dadurch gekennzeichnet, dass**
der Verlauf der Wellenleiterstruktur (4) derart ermittelt wird (104), dass ein dem Koppelelement (3) zugeordnetes Ende der Wellenleiterstruktur (4) derart positioniert und ausgerichtet wird, dass ein möglichst grosser Anteil von aus der Wellenleiterstruktur (4) austretendem Licht (81) auf die reflektierende gekrümmte Fläche (31) fällt und von dieser kollimiert wird.

5. Verfahren nach einem der vorangehenden Ansprüche, **dadurch gekennzeichnet, dass**
die Herstellung der Wellenleiterstruktur (4) das Aufbringen einer Kemschicht (42) auf die Unterlagsschicht (41) beinhaltet.

6. Verfahren nach Anspruch 5, **dadurch gekennzeichnet, dass**
die Herstellung der Wellenleiterstruktur (4) das Aufbringen einer Deckschicht (43) auf die Kemschicht (42) beinhaltet.

7. Verfahren nach Anspruch 5, **dadurch gekennzeichnet, dass**
die Herstellung der Wellenleiterstruktur (4) das Aufbringen einer Deckschicht (43) auf die Kernschicht (42) und die Grundschicht (41) beinhaltet.

8. Verfahren nach Anspruch 5 oder 6, **dadurch gekennzeichnet, dass**
als Unterlagsschicht (41) und/oder Kernschicht (42) und/oder Deckschicht (43) eine lichtaushärtbare Schicht, vorzugsweise ein lichtaushärtbares Polymer, gewählt wird und das Strukturieren dieser Schicht (41, 42, 43) durch Direktschreiben mit einer Lichtquelle (6), vorzugsweise einem UV-Halbieiterlaser, zwecks Aushärtens und anschliessenden Rückentwicklung erfolgt.

9. Verfahren nach einem der Ansprüche 5 bis 8, **dadurch gekennzeichnet, dass** die Wellenleiterstruktur (4) als Streifenwellenleiter ausgestaltet ist.

10. Verfahren nach einem der vorangehenden Ansprüche, **dadurch gekennzeichnet, dass**
das Koppelelement (3) auf dem Substrat (2) befestigt wird, beispielsweise durch einen Kleb- oder Lötprozess.

11. Verfahren nach einem der vorangehenden Ansprüche, **dadurch gekennzeichnet, dass**
das Substrat (2) eine mit elektrischen und/oder optischen Leiterbahnen und/oder Komponenten ausgestattete Leiterplatte oder eine Innenlage oder Aussenlage für eine solche Leiterplatte ist.

12. Verfahren nach einem der vorangehenden Ansprüche, **dadurch gekenntzeichnet, dass**
das optische Bauteil (1) eine Vielzahl von auf dem Substrat (2) befindlichen Koppelelementen (3.1-3.5) beinhaltet.

13. Verfahren nach einem der vorangehenden Ansprüche, **dadurch gekennzeichnet, dass**
auf dem optischen Bauteil (1) eine Vielzahl von gekrümmten reflektierenden Flächen (31.1, 31.2, ...) vorhanden ist, das optische Bauteil (1) eine Vielzahl von Wellenleiterstrukturen (4.1, 4.2, ...) beinhaltet, und einer Wellenleiterstruktur (4.1) jeweils eine reflektierende gekrümmte Fläche (31.1, 31.2, ...) zugeordnet ist.

14. Verfahren nach einem der vorangehenden Ansprüche, **dadurch gekennzeichnet, dass**
die Unterlagsschicht (41) eine Dicke zwischen 10 µm und 500 µm aufweist, vorzugsweise zwischen 50 µm und 200 µm.

15. Verfahren nach einem der vorangehenden Ansprüche, **dadurch gekennzeichnet, dass**
der Brechungsindex der Unterlagsschicht (41) für sichtbares Licht zwischen 1.47 und 1.57 liegt.

16. Verfahren nach einem der vorangehenden Ansprüche, **dadurch gekennzeichnet, dass**
die Kernschicht (42) eine Dicke zwischen 1 µm und 500 µm aufweist.

17. Verfahren nach Anspruch 15, **dadurch gekennzeichnet, dass**
der Brechungsindex der Kemschicht (42) für sichtbares Licht grösser ist als der Brechungsindex der Unterlagsschicht (41) und vorzugsweise zwischen 1.50 und 1.60 liegt.

## Claims

1. A method of producing an optical component (1), wherein
the optical component (1) includes a waveguide structure (4) and at least one coupling element (3) for the optical coupling of the waveguide structure (4) to another optical component;
the coupling element (3) includes a reflective surface (31.1 - 31.8) suitable for altering the propagation direction of light (81), which is propagated between the waveguide structure (4) and the other optical component;
the waveguide structure (4) and the coupling element (3) are attached to a common substrate (2) ; and
the waveguide structure (4) has a base layer (41) and a core layer (42) applied to the substrate (2),
**characterised in that**
the substrate (2) and at least one coupling element (3) are provided (101),
the coupling element (3) is applied (102) to the substrate (2),
the base layer (41) is applied to the substrate (2) and at least one coupling element (3),
after the coupling element(3) has been applied (102), the position of the coupling element (3) on the substrate (2) is measured (103),
based on the measurement (103) a suitable path for a waveguide structure (4) is determined (104) relative to the position of the optical coupling element (3) and
the waveguide structure (4) is produced (105) on the base layer (41) with the suitable path determined.

2. The method according to claim 1, **characterised in that** the measurement (103) is carried out using at least one camera (5) followed by image processing.

3. The method according to claim 1 or 2, **characterised in that** at least one positional coordinate for the coupling element (3) is determined during the measurement (103) in a coordinate system attributable to the substrate (2).

4. The method according to one of the preceding claims, **characterised in that**
the path of the waveguide structure (4) is determined (104) in such a way that one end of the waveguide structure (4) assigned to the coupling element (3) is positioned and aligned so that the greatest possible proportion of light (81) emerging from the waveguide structure (4) falls on the reflective, curved surface (31) and is collimated by the latter.

5. The method according to one of the preceding claims, **characterised in that**
production of the waveguide structure (4) includes the application of a core layer (42) to the base layer (41).

6. The method according to claim 5, **characterised in that**
production of the waveguide structure (4)includes the application of a top layer (43) to the core layer (42).

7. The method according to claim 5, **characterised in that** production of the waveguide structure (4) includes the application of a top layer (43) to the core layer (42) and the base layer (41).

8. The method according to claim 5 or 6, **characterised in that**
a light-hardenable, preferably a light-hardenable polymer, is chosen as the base layer (41) and/or the core layer (42) and/or the top layer (43) and this layer (41, 42, 43) is structured by direct writing with a light source (6), preferably a UV semiconductor laser, for hardening and subsequent retrogression.

9. The method according to one of the claims 5 to 8, **characterised in that**
the waveguide structure (4) takes the form of a strip waveguide.

10. The method according to one of the preceding claims, **characterised in that**
the coupling element (3) is secured to the substrate (2), using an adhesive or soldering process, for instance.

11. The method according to one of the preceding claims, **characterised in that**
the substrate (2) is a circuit board fitted with electrical and/or optical conductors and/or components or an inner or outer layer for such a circuit board.

12. The method according to one of the preceding claims, **characterised in that**
the optical component (1) includes a multiplicity of coupling elements (3.1-3.5) located on the substrate (2).

13. The method according to one of the preceding claims, **characterised in that**
there is a multiplicity of curved, reflective surfaces (31.1, 31.2,...) on the optical component (1), the optical component (1) includes a multiplicity of waveguide structures (4.1, 4.2,...) and each waveguide structure (4.1) is assigned a reflective, curved surface (31.1, 31.2, ...) .

14. The method according to one of the preceding claims, **characterised in that**
the base layer (41) is between 10 and 500 µm thick, preferably between 50 and 200 µm.

15. The method according to one of the preceding claims, **characterised in that**
the refractive index of the base layer (41) for visible light is between 1.47 and 1.57.

16. The method according to one of the preceding claims, **characterised in that**
the core layer (42) is between 1 and 500 µm thick.

17. The method according to claim 15, **characterised in that**
the refractive index of the core layer (42) for visible light is greater than the refractive index of the base layer (41) and is preferably between 1.50 and 1.60.

## Revendications

1. Procédé pour fabriquer un composant (1) optique,
le composant (1) optique contenant une structure de guide d'ondes (4) et au moins un élément de couplage (3) pour le couplage optique de la structure de guide d'ondes (4) avec un autre composant optique ;
l'élément de couplage (3) contenant une surface (31.1-31.8) réfléchissante, qui est appropriée pour la modification du sens de propagation de lumière (81) qui se propage entre la structure de guide d'ondes (4) et l'autre composant optique ;
la structure de guide d'ondes (4) et l'élément de couplage (3) étant placés sur un substrat (2) commun ; et
la structure de guide d'ondes (4) présentant une couche d'appui (41) appliquée sur le substrat (2) et une couche centrale (42),
**caractérisé en ce que**
le substrat (2) et le au moins un élément de couplage (3) sont mis à disposition (101),
l'élément de couplage (3) est appliqué (102) sur le substrat (2),
la couche d'appui (41) étant appliquée sur le substrat (2) et le au moins un élément de couplage (3),
la position de l'élément de couplage (3) sur le substrat (2) étant mesurée (103) après l'application (102) de l'élément de couplage (3),
un tracé approprié par rapport à la position de l'élément de couplage (3) optique d'une structure de guide d'ondes (4) étant déterminé (104) sur la base du mesurage (103) et
la structure de guide d'ondes (4) étant fabriquée (105) avec le tracé approprié déterminé sur la couche d'appui (41).

2. Procédé selon la revendication 1, **caractérisé en ce que**
le mesurage (103) s'effectue au moyen d'au moins un appareil photo (5) et d'un traitement d'image consécutif.

3. Procédé selon la revendication 1 ou 2, **caractérisé en ce que**
au moins une coordonnée locale de l'élément de couplage (3) est déterminée lors du mesurage (103) dans un système de coordonnées pouvant être attribué au substrat (2).

4. Procédé selon l'une quelconque des revendications précédentes, **caractérisé en ce que**
le tracé de la structure de guide d'ondes (4) est déterminé (104) de telle sorte qu'une extrémité, attribuée à l'élément de couplage (3), de la structure de guide d'ondes (4) est positionnée et orientée de telle sorte qu'une fraction la plus grande possible de la lumière (81) sortant de la structure de guide d'ondes (4) tombe sur la surface (31) incurvée réfléchissante et est collimatée par celle-ci.

5. Procédé selon l'une quelconque des revendications précédentes, **caractérisé en ce que**
la fabrication de la structure de guide d'ondes (4) contient l'application d'une couche centrale (42) sur la couche d'appui (41).

6. Procédé selon la revendication 5, **caractérisé en ce que** la fabrication de la structure de guide d'ondes (4) contient l'application d'une couche de revêtement (43) sur la couche centrale (42).

7. Procédé selon la revendication 5, **caractérisé en ce que**
la fabrication de la structure de guide d'ondes (4) contient l'application d'une couche de revêtement (43) sur la couche centrale (42) et la couche de base (41).

8. Procédé selon la revendication 5 ou 6, **caractérisé en ce que**
on choisit comme couche d'appui (41) et/ou comme couche centrale (42) et/ou comme couche de revêtement (43) une couche durcissable à la lumière, de préférence un polymère durcissable à la lumière, et la structuration de cette couche (41, 42, 43) s'effectue par lecture directe avec une source de lumière (6), de préférence un laser UV à semi-conducteurs, pour le durcissement et le rétro-développement consécutif.

9. Procédé selon l'une quelconque des revendications 5 à 8, **caractérisé en ce que** la structure de guide d'ondes (4) est conçue comme guide d'ondes à ruban.

10. Procédé selon l'une quelconque des revendications précédentes, **caractérisé en ce que**
l'élément de couplage (3) est fixé sur le substrat (2), par exemple par un processus de collage ou de brasage.

11. Procédé selon l'une quelconque des revendications précédentes, **caractérisé en ce que**
le substrat (2) est une plaque de circuits imprimés conçue avec des pistes conductrices et/ou des composants électriques et/ou optiques ou une couche intérieure ou une couche extérieure pour une telle plaque de circuits imprimés.

12. Procédé selon l'une quelconque des revendications précédentes, **caractérisé en ce que**
le composant (1) optique contient une pluralité d'éléments de couplage (3.1-3.5) se trouvant sur le substrat (2).

13. Procédé selon l'une quelconque des revendications précédentes, **caractérisé en ce que**
une pluralité de surfaces (31.1, 31.2, ...) réfléchissantes et incurvées est présente sur le composant (1) optique, le composant optique (1) contient une pluralité de structures de guide d'ondes (4.1, 4.2, ...) et à chaque fois une surface (31.1, 31.2, ...) incurvée et réfléchissante est attribuée à une structure de guide d'ondes (4.1).

14. Procédé selon l'une quelconque des revendications précédentes, **caractérisé en ce que**
la couche d'appui (41) présente une épaisseur comprise entre 10 µm et 500 µm, de préférence entre 50 µm et 200 µm.

15. Procédé selon l'une quelconque des revendications précédentes, **caractérisé en ce que**
l'indice de réfraction de la couche d'appui (41) pour la lumière visible est compris entre 1,47 et 1,57.

16. Procédé selon l'une quelconque des revendications précédentes, **caractérisé en ce que**
la couche centrale (42) présente une épaisseur comprise entre 1 µm et 500 µm.

17. Procédé selon la revendication 15, **caractérisé en ce que**
l'indice de réfraction de la couche centrale (42) pour la lumière visible est supérieur à l'indice de réfraction de la couche d'appui (41) et se situe de préférence entre 1,50 et 1,60.
